# FASCICULE DE BREVET EUROPEEN

(11) **EP 4 076 794 B1**
(45) Date de publication et mention de la délivrance du brevet: **18.09.2024**
(21) Numéro de dépôt: 20842285.7
(22) Date de dépôt: 10.12.2020
(51) Int. Cl.: B22F 3/105, B22F 5/00, B22F 5/04, B23P 15/00, C22C 47/04, C22C 47/06, C22C 47/14, C22C 47/20, C22C 49/08, C22C 49/14, F01D 5/28, F01D 5/34

(54) **PROCÉDÉ DE FABRICATION D'UNE ROUE AUBAGÉE DE TURBOMACHINE COMPOSITE À RENFORT CÉRAMIQUE**
VERFAHREN ZUR HERSTELLUNG EINES SCHAUFELRADES EINER TURBOMASCHINE AUS KERAMIKVERSTÄRKTEM VERBUNDWERKSTOFF
METHOD OF MANUFACTURING A CERAMIC-REINFORCED COMPOSITE TURBOMACHINE BLISK

(30) Priorité: 20.12.2019 FR 1915115
(43) Date de publication de la demande: 26.10.2022
(73) Titulaire: SAFRAN, 75015 Paris (FR)
(72) Inventeur: SALLOT, Pierre Jean, 77550 MOISSY-CRAMAYEL (FR); FRANCHET, Jean-Michel Patrick Maurice, 77550 MOISSY-CRAMAYEL (FR)
(74) Mandataire: Cabinet Beau de Loménie
(86) Numéro de dépôt international: PCT/FR2020/052375
(87) Numéro de publication internationale: WO 2021/123577

(56) Documents cités:
- EP-A1- 1 859 897
- EP-B1- 1 859 897
- CN-A- 110 560 694
- FR-A1- 2 970 266
- FR-A1- 3 036 409
- FR-A1- 3 048 630

## Description

### Domaine Technique

La présente invention se rapporte au domaine général de la fabrication d'un matériau composite à matrice métallique (CMM) à base de nickel.

L'invention trouve une application particulièrement intéressante pour la fabrication de roues aubagées de turbine, et notamment de turbine haute pression, d'une turbomachine.

### Technique antérieure

Il est connu de l'état de la technique d'utiliser des inserts en matériau composite à matrice métallique (CMM) pour renforcer des roues aubagées de turbine en alliage métallique. De tels inserts sont formés par des fibres en céramique qui viennent renforcer une matrice métallique.

Une telle solution est utilisée pour la fabrication d'anneaux aubagés monobloc (ANAM).

Une roue aubagée renforcée par un insert CMM est généralement fabriquée selon le procédé suivant :
- bobinage de fibres céramique entourées par un matériau constitutif de la matrice métallique sur un outillage afin de former un insert bobiné ;
- transfert de l'insert bobiné dans un moule comprenant un alliage métallique constitutif de la pièce finale à fabriquer ;
- réalisation d'un cycle de compaction isostatique à chaud afin de compacter et souder par diffusion l'ensemble des éléments présents dans le moule.

Un tel procédé est décrit dans FR 3 036 409 A1.

Or, les solutions connues peuvent rencontrer plusieurs difficultés.

Notamment, la température et la durée de l'étape de compaction isostatique à chaud doivent être déterminées précisément afin d'une part d'éviter d'endommager les fibres céramiques , et d'autre part d'assurer une bonne compaction de la pièce.

En outre, l'étape de compaction isostatique à chaud peut entrainer des déformations ainsi qu'une modification du positionnement du renfort dans la pièce Enfin, lors du transfert de l'insert du moule après son bobinage, le paquet de fibres formant l'insert peut se déformer.

### Exposé de l'invention

La présente invention a donc pour objectif de proposer une solution pour la fabrication d'une roue aubagée renforcée par un insert CMM qui résout les problèmes cités précédemment.

La présente invention propose un procédé de fabrication d'une roue aubagée d'une turbomachine métallique renforcé par un insert en matériau composite à matrice métallique, ledit procédé comprenant l'étape suivante :
- bobinage des fibres de céramique autour d'un mandrin afin de former l'insert, les fibres de céramique étant entourées par un matériau constitutif de la matrice ; caractérisé en ce que le procédé comprend les étapes suivantes :
- consolidation sur le mandrin de l'insert par frittage flash avec une première poudre de métal constitutif de la roue aubagée à fabriquer;
- placement de l'insert consolidé dans un moule comprenant une deuxième poudre de métal constitutif de la roue aubagée à fabriquer;
- densification de l'insert par frittage flash avec la deuxième poudre de métal dans le moule.

L'utilisation du frittage flash (ou « Spark Plasma Sintering » selon la terminologie anglo-saxonne) permet de densifier l'insert CMM en un temps très court, permettant ainsi de limiter le risque d'endommagement des fibres céramiques par apparition d'espèces fragilisantes par interdiffusion entre les fibres et la matrice métallique, tout en assurant un degré de densification satisfaisant.

Selon une caractéristique possible, l'insert atteint un taux de compaction compris entre 60% et 80% à la fin de l'étape de consolidation.

Selon une caractéristique possible, la première poudre de métal et la deuxième poudre de métal sont différentes.

Selon une caractéristique possible, la première poudre de métal et la deuxième poudre de métal sont identiques.

Selon une caractéristique possible, les fibres céramiques sont revêtues d'une couche en matériau constitutif de la matrice.

Selon une caractéristique possible, des fils en matériau constitutif de la matrice sont toronnées autour des fibres céramiques.

Selon une caractéristique possible, la roue aubagée est en alliage à base de nickel, les fibres céramiques comprennent du carbone et sont revêtues d'une couche de protection contre la diffusion.

Selon une caractéristique possible, la roue aubagée est en alliage à base de titane. Selon une caractéristique possible, les fibres céramiques sont en carbure de silicium.

Selon une caractéristique possible, la roue aubagée est un anneau aubagé monobloc.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif.
[Fig. 1] La figure 1 représente schématiquement les étapes d'un procédé de fabrication d'une roue aubagée d'une turbomachine.
[Fig. 2] La figure 2 représente schématiquement les étapes d'un procédé de fabrication d'une roue aubagée d'une turbomachine selon la présente invention.
[Fig. 3] La figure 3 représente schématiquement une vue en coupe de la consolidation d'un insert sur un mandrin sur lequel les fibres formant le mandrin sont enroulées.
[Fig. 4] La figure 4 représente schématiquement une vue en coupe de la densification de l'insert qui a été densifié au préalable.
[Fig. 5a] La figure 5a représente schématiquement une première variante de composition de l'insert sans couche de protection contre la diffusion.
[Fig. 5b] La figure 5b représente schématiquement une première variante de composition de l'insert avec une couche de protection contre la diffusion.
[Fig. 6a] La figure 6a représente schématiquement une deuxième variante de composition de l'insert sans couche de protection contre la diffusion.
[Fig. 6b] La figure 6b représente schématiquement une deuxième variante de composition de l'insert avec une couche de protection contre la diffusion.

### Description des modes de réalisation

L'invention concerne un procédé de fabrication d'une roue aubagée d'une turbomachine, et notamment une roue aubagée de turbine. Une roue aubagée peut être une roue fixe ou bien être entrainée en rotation. Une roue aubagée de turbine est une roue aubagée qui est située en aval d'une chambre de combustion de la turbomachine.

La roue aubagée peut être une roue aubagée de turbine haute pression, c'est-à-dire de la turbine située directement en aval de la chambre de combustion, ou bien une roue aubagée de turbine basse pression, c'est-à-dire la turbine située en aval de la turbine haute pression.

La turbomachine est une turbomachine d'aéronef, comme par exemple une turbomachine d'avion, ou par exemple une turbomachine d'hélicoptère.

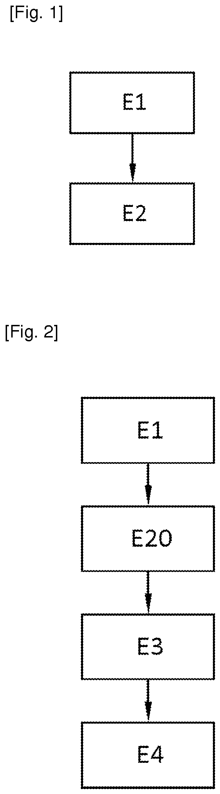

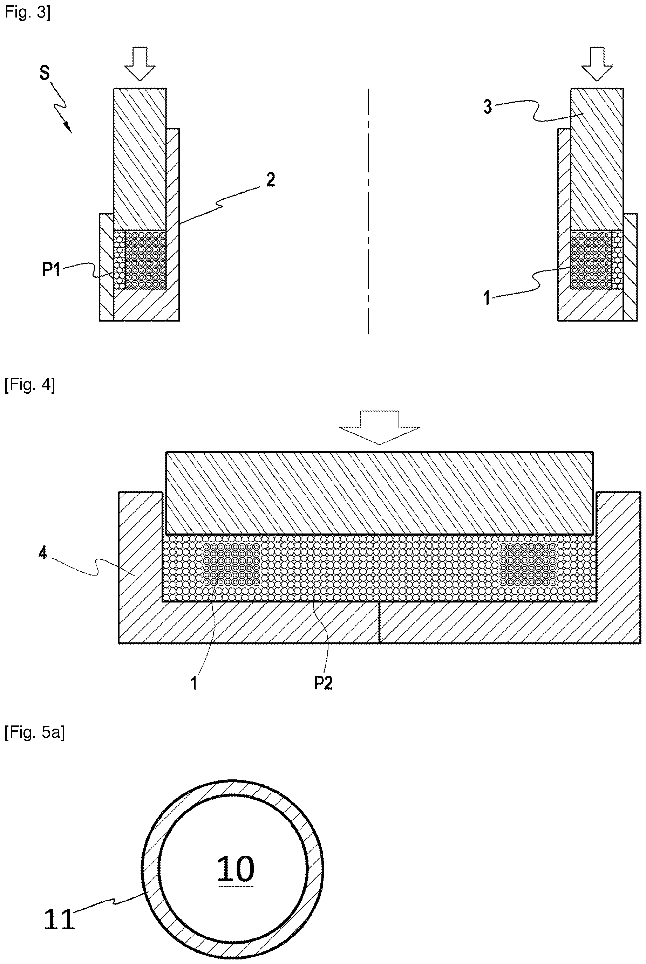

Comme cela est illustré sur la figure 1 et la figure 3, un procédé de fabrication d'une roue aubagée d'une turbomachine, et notamment d'une roue aubagée d'une turbine, comprend les étapes suivantes :
- E1 : un insert 1 en composite à matrice métallique (CMM) est fabriqué en bobinant des fibres en céramique qui sont entourées par un matériau constitutif de la matrice autour d'un mandrin 2. L'insert 1 ainsi fabriqué possède une forme annulaire, comme cela est visible sur la figure 3.
- E2 : un frittage flash (ou « Spark Plasma Sintering » selon la terminologie anglo-saxonne) est réalisé avec l'insert 1 et de la poudre de métal constitutif de la roue aubagée à fabriquer. Le frittage flash est réalisé en compactant la poudre de métal et l'insert 1 et en appliquant un courant électrique qui traverse la poudre métallique et l'insert 1. Le frittage flash offre l'avantage d'être rapide, la durée du frittage flash est notamment inférieure à 15 minutes, ce qui limite le risque de déstabilisation des structures métallurgiques des différents alliages. Ainsi, par rapport à la compaction isostatique à chaud, le risque d'endommagement des fibres céramiques par la formation de phases fragilisantes est plus faible.

Les modes de réalisations pour mettre en oeuvre le procédé selon la présente invention sont illustrés sur les figures 2 à 4, où l'insert 1 est d'abord consolidé afin que ledit insert 1 puisse être manipulé sans risque de déformation, puis être densifié complètement afin de former la roue aubagée à fabriquer.

Ainsi, comme illustré sur la figure 2, selon la présente invention, le procédé comprend les étapes suivantes :
- E1 : l'insert 1 CMM est fabriqué en bobinant les fibres en céramique entourées par un matériau constitutif de la matrice autour du mandrin 2.
- E20 : l'insert 1 est consolidé en restant sur le mandrin 2 par frittage flash de l'insert 1 avec une première poudre de métal P1 constitutif de la roue aubagée à fabriquer. La première poudre de métal P1 est ajoutée après le bobinage de l'insert 1. L'étape E20 est mise en oeuvre par un système de bobinage et de frittage flash S qui comprend d'une part le mandrin 2 sur lequel les différentes fibres de l'insert 1 sont bobinées, et d'autre part un dispositif de frittage flash 3 qui est configuré pour réaliser un frittage flash de l'insert 1 avec la première poudre de métal P1 directement sur le mandrin 2. Le dispositif de frittage flash 3 est notamment configuré pour compresser l'insert 1 et la première poudre de métal P1 sur le mandrin 2, et pour injecter un courant électrique permettant le frittage de la poudre. Le frittage flash de l'étape E20 de consolidation de l'insert 1 est réalisé de sorte que l'insert 1 puisse être manipulé en conservant sa forme sans assistance d'outillage de maintien. Le frittage flash de l'étape E20 peut notamment être configuré pour que l'insert 1 atteigne un taux de compaction compris entre 60% et 80%. Le taux de compaction de l'insert 1 est notamment fonction de la pression appliquée lors du frittage flash, de la durée du frittage flash, de l'intensité du courant appliqué lors du frittage flash, ainsi que de la quantité de première poudre P1 utilisée. Un tel taux de compaction permet la manipulation de la pièce sans risque d'endommagement, et permet également de réduire la durée de l'étape E20. Le taux de compaction correspond à l'inverse du taux de porosité, un taux de compaction de 80% correspondant à un taux de porosité de 20%. Par taux de porosité on comprend ici le volume des porosités divisé par le volume total de la pièce.
- E3 : l'insert 1 consolidé est retiré du mandrin 2 et est placé dans un moule 4. Une deuxième poudre de métal P2 constitutif de la roue aubagée à fabriquer est également placée dans le moule 4. Le moule 4 possède la forme de la roue aubagée à fabriquer.
- E4 : la roue aubagée est fabriquée en densifiant l'insert 1 par frittage flash dudit insert 1 avec la deuxième poudre de métal P2 dans le moule 4. Le frittage flash de l'étape E4 permet de limiter le risque d'apparition de phases fragilisantes. A la fin de l'étape E4 de densification, l'insert 4 possède un taux de compaction supérieur à 95%, et de préférence supérieure à 99%.

A la fin de l'étape E4 de densification, il est obtenu une roue aubagée de turbomachine formée par un insert 1 fibreux en CMM qui est noyé dans du métal.

Selon une variante possible permettant de créer un mutli-matériaux autour de l'insert 1, la première poudre de métal P1 et la deuxième poudre de métal P2 sont différentes. Les deux poudres peuvent par exemple être différentes en utilisant deux alliages avec des nuances différentes. Cette variante peut notamment permettre d'adapter les caractéristiques mécaniques de la roue aubagée à fabriquer.

Selon une autre variante possible permettant d'obtenir une roue aubagée plus homogène, la première poudre de métal P1 et la deuxième poudre de métal P2 sont identiques.

Comme indiqué précédemment, les fibres céramiques de l'insert 1 sont entourées d'une couche en matériau constitutif de la matrice métallique dudit insert 1. Pour ce faire, plusieurs variantes sont possibles.

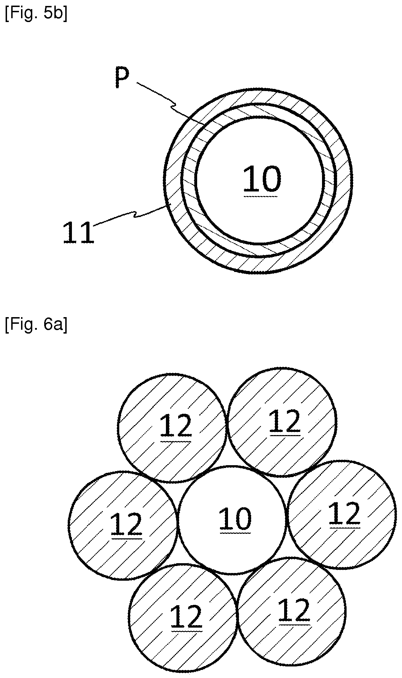

Selon une première variante illustrée sur les figures 5a et 5b, une fibre de céramique 10 est revêtue d'une couche en matériau constitutif de la matrice 11. La fibre de céramique 10 peut être en carbure de silicium ou une autre céramique comprenant du carbone, et la couche en matériau constitutif de la matrice 11 peut être en alliage à base de nickel ou en alliage à base de titane. De manière préférentielle, lorsque la couche en matériau constitutif de la matrice 11 est en alliage à base de nickel et la fibre céramique comprend du carbone, comme cela est illustré sur la figure 5b, une couche de protection contre la diffusion P peut être déposée sur la fibre de céramique 10, la couche de protection contre la diffusion P étant située entre la céramique et le métal de la matrice. La couche de protection contre la diffusion P peut par exemple être en tungstène ou bien en alumine.

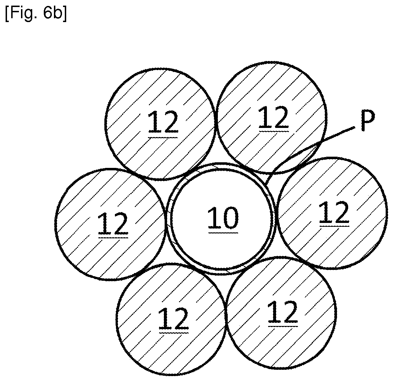

Selon une deuxième variante illustrée sur les figures 6a et 6b, des fils en matériau constitutif de la matrice 12 sont toronnées autour d'une fibre céramique 10. La fibre de céramique 10 peut être en carbure de silicium ou une autre céramique comprenant du carbone, et la couche en matériau constitutif de la matrice 11 peut être en alliage à base de nickel ou en alliage à base de titane. De manière préférentielle, lorsque la couche en matériau constitutif de la matrice 11 est en alliage à base de nickel et la fibre céramique comprend du carbone, comme cela est illustré sur la figure 6b, une couche de protection contre la diffusion P peut être déposée sur la fibre de céramique 10, la couche de protection contre la diffusion P étant située entre la céramique et le métal de la matrice. La couche de protection contre la diffusion P peut par exemple être en tungstène ou bien en alumine.

L'utilisation de la densification par frittage flash de l'insert 1 permet notamment de diminuer l'épaisseur de la couche de protection contre la diffusion P, les temps de cycle étant réduits.

L'invention est particulièrement adaptée pour la fabrication d'un anneau aubagé monobloc (ANAM).

## Revendications

1. Procédé de fabrication d'une roue aubagée d'une turbomachine métallique renforcée par un insert (1) en matériau composite à matrice métallique, ledit procédé comprenant l'étape suivante :
- (E1) : bobinage des fibres de céramique (10) autour d'un mandrin (2) afin de former l'insert (1), les fibres de céramique (10) étant entourées par un matériau constitutif de la matrice (11, 12) ;
**caractérisé en ce que** le procédé comprend les étapes suivantes :
- (E20) : consolidation sur le mandrin (2) de l'insert (1) par frittage flash avec une première poudre de métal (P1) constitutif de la roue aubagée à fabriquer ;
- (E3) : placement de l'insert (1) consolidé dans un moule (4) comprenant une deuxième poudre de métal (P2) constitutif de la roue aubagée à fabriquer ;
- (E4) : densification de l'insert (1) par frittage flash avec la deuxième poudre de métal (P2) dans le moule (4).

2. Procédé selon la revendication 1, dans lequel l'insert (1) atteint un taux de compaction compris entre 60% et 80% à la fin de l'étape de consolidation(E20).

3. Procédé selon l'une quelconque des revendications 1 à 2, dans lequel la première poudre de métal (P1) et la deuxième poudre de métal (P2) sont différentes.

4. Procédé selon l'une quelconque des revendications 1 à 2, dans lequel la première poudre de métal (P1) et la deuxième poudre de métal (P2) sont identiques.

5. Procédé selon l'une quelconque des revendications 1 à 4, dans lequel les fibres céramiques (10) sont revêtues d'une couche en matériau constitutif de la matrice (11).

6. Procédé selon l'une quelconque des revendications 1 à 4, dans lequel des fils en matériau constitutif de la matrice (12) sont toronnées autour des fibres céramiques (10).

7. Procédé selon l'une quelconque des revendications 1 à 6, dans lequel la roue aubagée est en alliage à base de nickel, les fibres céramiques (10) comprennent du carbone et sont revêtues d'une couche de protection contre la diffusion (P).

8. Procédé selon l'une quelconque des revendications 1 à 6, dans lequel la roue aubagée est en alliage à base de titane.

9. Procédé selon l'une quelconque des revendications 1 à 8,dans lequel les fibres céramiques sont en carbure de silicium.

10. Procédé selon l'une quelconque des revendications 1 à 9, dans lequel la roue aubagée est un anneau aubagé monobloc.

## Patentansprüche

1. Verfahren zur Herstellung eines durch einen Einsatz (1) aus Verbundmaterial mit metallischer Matrix verstärkten Schaufelrades einer Turbomaschine aus Metall, wobei das Verfahren den folgenden Schritt umfasst:
- (E1): Wickeln der Keramikfasern (10) um einen Wickelkern (2), um den Einsatz (1) zu bilden, wobei die Keramikfasern (10) von einem Material umgeben sind, das die Matrix (11, 12) bildet;
**dadurch gekennzeichnet, dass** das Verfahren die folgenden Schritte umfasst:
- (E20): Konsolidieren des Einsatzes (1) auf dem Wickelkern (2) durch Flash-Sintern mit einem ersten Metallpulver (P1), aus dem das herzustellende Schaufelrad gebildet ist;
- (E3): Platzieren des konsolidierten Einsatzes (1) in einer Form (4), die ein zweites Metallpulver (P2) umfasst, aus dem das herzustellende Schaufelrad gebildet ist;
- (E4): Verdichten des Einsatzes (1) durch Flash-Sintern mit dem zweiten Metallpulver (P2) in der Form (4).

2. Verfahren nach Anspruch 1, wobei der Einsatz (1) einen Verdichtungsgrad erreicht, der zwischen 60 % und 80 % am Ende des Konsolidierungsschritts (E20) liegt.

3. Verfahren nach einem der Ansprüche 1 bis 2, wobei das erste Metallpulver (P1) und das zweite Metallpulver (P2) unterschiedlich sind.

4. Verfahren nach einem der Ansprüche 1 bis 2, wobei das erste Metallpulver (P1) und das zweite Metallpulver (P2) identisch sind.

5. Verfahren nach einem der Ansprüche 1 bis 4, wobei die Keramikfasern (10) mit einer Schicht aus Material beschichtet sind, aus dem die Matrix (11) besteht.

6. Verfahren nach einem der Ansprüche 1 bis 4, wobei Fäden aus Material, aus dem die Matrix (12) besteht, um Keramikfasern (10) verseilt sind.

7. Verfahren nach einem der Ansprüche 1 bis 6, wobei das Schaufelrad aus Legierung auf der Basis von Nickel ist, wobei die Keramikfasern (10) Kohlenstoff umfassen und mit einer Schutzschicht gegen Diffusion (P) beschichtet sind.

8. Verfahren nach einem der Ansprüche 1 bis 6, wobei das Schaufelrad aus Legierung auf der Basis von Titan ist.

9. Verfahren nach einem der Ansprüche 1 bis 8, wobei die Keramikfasern aus Siliziumcarbid sind.

10. Verfahren nach einem der Ansprüche 1 bis 9, wobei das Schaufelrad ein einteiliger Schaufelring ist.

## Claims

1. A method for manufacturing a metal bladed wheel of a turbomachine reinforced by an insert (1) made of metal matrix composite material, said method comprising the following step:
- (E1): winding the ceramic fibers (10) around a mandrel (2) in order to form the insert (1), the ceramic fibers (10) being surrounded by a material constituting the matrix (11, 12);
**characterized in that** the method comprises the following steps:
- (E20): performing a consolidation on the mandrel (2) of the insert (1) by spark plasma sintering with a first powder (P1) of metal constituting the bladed wheel to be manufactured;
- (E3): placing the consolidated insert (1) in a mold (4) comprising a second powder (P2) of metal constituting the bladed wheel to be manufactured;
- (E4): densifying the insert (1) by spark plasma sintering with the second metal powder (P2) in the mold (4).

2. The method according to claim 1, wherein the insert (1) reaches a compaction rate comprised between 60% and 80% at the end of the consolidation step (E20).

3. The method according to any one of claims 1 to 2, wherein the first metal powder (P1) and the second metal powder (P2) are different.

4. The method according to any one of claims 1 to 2, wherein the first metal powder (P1) and the second metal powder (P2) are identical.

5. The method according to any one of claims 1 to 4, wherein the ceramic fibers (10) are coated with a layer made of material constituting the matrix (11).

6. The method according to any one of claims 1 to 4, wherein yarns made of material constituting the matrix (12) are stranded around the ceramic fibers (10).

7. The method according to any one of claims 1 to 6, wherein the bladed wheel is made of nickel-based alloy, the ceramic fibers (10) comprise carbon and are coated with a diffusion protection layer (P).

8. The method according to any one of claims 1 to 6, wherein the bladed wheel is made of titanium-based alloy.

9. The method according to any one of claims 1 to 8, wherein the ceramic fibers are made of silicon carbide.

10. The method according to any one of claims 1 to 9, wherein the bladed wheel is a one-piece bladed ring.
